# NEUE EUROPÄISCHE PATENTSCHRIFT

(11) **EP 1 232 071 B2**
(45) Veröffentlichungstag und Bekanntmachung des Hinweises auf die Entscheidung über den Einspruch: **12.11.2008**
(45) Hinweis auf die Patenterteilung: 28.12.2005
(21) Anmeldenummer: 00985097.5
(22) Anmeldetag: 27.11.2000
(51) Int. Cl.: B60Q 1/14

(54) **VERFAHREN UND VORRICHTUNG ZUM AUTOMATISCHEN EIN- ODER AUSSCHALTEN DER BELEUCHTUNG EINES FAHRZEUGS**
METHODS AND A DEVICE FOR AUTOMATICALLY SWITCHING ON OR OFF OF THE ILLUMINATION OF A VEHICLE
PROCEDE ET DISPOSITIF POUR L'ALLUMAGE OU L'EXTINCTION AUTOMATIQUE DE L'ECLAIRAGE D'UN VEHICULE AUTOMOBILE

(30) Priorität: 27.11.1999 DE 19957210
(43) Veröffentlichungstag der Anmeldung: 21.08.2002
(73) Patentinhaber: Valeo Wischersysteme GmbH, 74321 Bietigheim-Bissingen (DE)
(72) Erfinder: REICHERT, Andreas, 74343 Sachsenheim (DE); LÄGLER, Andreas, 74336 Brackenheim (DE)
(74) Vertreter: Jahn, Wolf-Diethart
(86) Internationale Anmeldenummer: PCT/EP2000/011779
(87) Internationale Veröffentlichungsnummer: WO 2001/040021

(56) Entgegenhaltungen:
- EP-A- 0 028 977
- DE-A- 2 264 481
- DE-A- 2 656 265
- DE-A- 4 317 772
- DE-A- 19 523 262
- DE-A- 19 630 216
- GB-A- 2 102 117
- US-A- 4 290 047
- PATENT ABSTRACTS OF JAPAN vol. 009, no. 007 (M-350), 12. Januar 1985 (1985-01-12) & JP 59 156841 A (NISSAN JIDOSHA KK), 6. September 1984 (1984-09-06)

## Beschreibung

Die Erfindung betrifft eine Vorrichtung zum automatischen Ein- oder Ausschalten der Beleuchtung eines Fahrzeugs nach dem Oberbegriff des Anspruchs 1.

Eine derartige Vorrichtung ist aus der DE 19523262 A1 bekannt.

Aufgabe der Erfindung ist es, die bekannte Vorrichtung derart weiterzubilden, daß eine sichere Tunnelerkennung, auch bei kurvigem Sraßenverlauf ermöglicht wird. Diese Aufgabe wird bei der Vorrichtung mit den Merkmalen des Anspruchs 1 gelöst.

Weitere Vorteile und vorteilhafte Ausgestaltungen der Erfindung sind der nachfolgenden Beschreibung, der Zeichnung und den Patentansprüchen entnehmbar.

Ein Ausführungsbeispiel des Gegenstands der Erfindung ist in der Zeichnung dargestellt und im folgenden näher beschrieben. Es zeigen:
- Fig. 1:: eine graphische Veranschaulichung eines Verfahrens und
- Fig. 2:: ein mit einer erfindungsgemäßen Vorichtung ausgestattetes Fahrzeug.

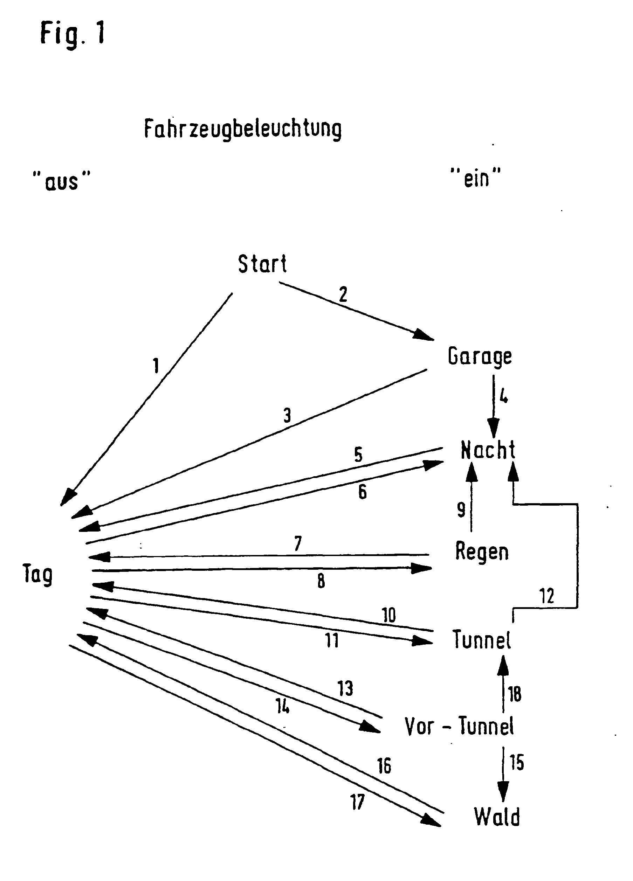

In Fig. 1 sind die verschiedenen Betriebsmodi, nachfolgend als "Modus" bezeichnet, und die möglichen Wechsel zwischen diesen Modi dargestellt. Im Modus "Tag" ist die Fahrzeugbeleuchtung ausgeschaltet, während sie in den Modi "Garage", "Nacht", "Regen", "Tunnel", "Vor-Tunnel" und "Wald" eingeschaltet ist.

Eine Sonderstellung nimmt der Modus "Start" ein. Mit Inbetriebnahme des Fahrzeugs ist das System im "Start"-Modus und geht, abhängig von der ermittelten Umgebungshelligkeit, in den Modus "Tag" oder "Nacht" über. Diese Modusänderungen sind in Fig. 1 durch die Pfeile mit den Nummern 2 und 1 veranschaulicht. In der nachfolgenden Tabelle sind die zu den Modusänderungen 1 bis 18 gehörigen Eingangsgrößen, Schwellwerte und Zeitkonstanten aufgelistet. Dabei stellt der Schwellwert *S* einen Grenzwert für die Helligkeit in Lux [lx] dar. Das Intervall T bestimmt die Dauer, während der die Eingangsgrößen über oder unter dem Schwellwert *S* oder ggf. der Fahrgeschwindigkeit *v* liegen müsen, um eine Modusänderung auszulösen. Die Fahrgeschwindigkeit v ist die Geschwindigkeit des Fahrzeugs, dessen Beleuchtung ein- oder ausgeschaltet wird.

In der Spalte "Spot" sind die Lichtsensoren aufgeführt, deren Helligkeitswerte mit dem Schwellwert *S* verglichen werden. Mit A wird ein erster Lichtsensor bezeichnet, der die Umgebungshelligkeit *H*_{amb} ermittelt. Mit "B" und "C" werden in Fahrtrichtung des Fahrzeugs gerichtete Lichtsensoren bezeichnet. Der Öffnungswinkel des Spots B ist größer als der von Spot C und kleiner als der von Spot A.

Bei den Modusänderungen 7 und 8 kommt es lediglich darauf an, ob es regnet oder nicht. Wenn es länger als 50 s regnet, was durch das Einschalten des Scheibenwischers oder ein entsprechendes Signal eines Regensensors erkannt wird, wird die Beleuchtung eingeschaltet (Modusänderung 8). Der Wechsel zurück in den Tag-Modus (Modusänderung 7) und das damit verbundene Ausschalten der Beleuchtung erfolgt, wenn der Scheibenwischer länger als 50 s ausgeschaltet wird oder der Regensensor länger als 50 s keinen Regen detektiert.

Bei der Modusänderung 12 erfolgt der Wechsel vom "Tunnel"-Modus in den "Nacht"-Modus nach dem Ablauf der Zeitkonstante "In-Tunnel-Zeit".

Manche Schwellwerte werden adaptiv in Abhängigkeit von der oder den ermittelten Helligkeiten und/oder der Fahrgeschwindigkeit *v* angepasst. Deshalb ist in Spalte 2 in diesen Fällen kein fester Schwellwert *S* angegeben.

**Tabelle**

| Modusänderung | Schwellwert *S* [1x] | Intervall *T* [s] | Fahrgeschwindigkeit *v* [km/h] | Spot | Beleuchtung |
|---|---|---|---|---|---|
| 1 | > 3000 | 0 | - | A, B | "aus" |
| 2 | < 3000 | 0 | - | A | "ein" |
| 3 | > 3000 | > 25 | > 35 | A, B | "aus" |
| 4 | < 3000 | > 25 | > 35 | A, B | "ein" |
| 5 | > 8000 | > 120 | - | A | "aus" |
| 6 | < 2500 | > 120 | - | A, B | "ein" |
| 7 | - | > 50 | - | Wischer "aus" | "aus" |
| 8 | - | > 50 | - | Wischer "ein" | "ein" |
| 9 | < 2500 | 0 | | A | "ein" |
| 10 | > 8000 | > 20 | - | A, B | "aus" |
| 11 | > Tunnelschwellwert | - | - | A, B | "ein" |
| 12 | | > "In-Tunnel"Zeit | - | - | |
| 13 | > 8000 | > 20s | - | A, B | "aus" |
| 14 | < adapt. Schwellwert | 0 | - | B, C | "ein" |
| 15 | < adapt. "wald"-Schwellwert, Spot A starke Signaländerung | - | - | A, B, C | "ein" |
| 16 | > 8000 | > 30 s | - | A, B | "aus" |
| 17 | < adapt. "Wald"-Schwellwert, Spot A starke Signaländerung | - | - | A, B, C | "ein" |
| 18 | < Tunnel-Schwellwert | - | - | A, B | "ein" |

Nachfolgend werden einige Modusänderungen exemplarisch beschrieben. Die anderen Modusänderungen ergeben sich in analoger Weise aus der Tabelle.

Ausgehend vom Start-Modus gelangt das System in den Garagen-Modus (Modusänderung 2), wenn der Spot A eine Helligkeit von weniger als 3000 lx in der Umgebung des mit einem erfindungsgemäßen Verfahren zum Einschalten der Fahrzeugbeleuchtung ausgestatteten Fahrzeugs ermittelt. In diesem Fall wird die Beleuchtung des Fahrzeugs eingeschaltet.

Wenn bei der Inbetriebnahme die Helligkeit in der Umgebung des Fahrzeugs größer als 3000 lx ist, und zwar gemessen von den Spots A und B, wird die Beleuchtung des Fahrzeugs nicht eingeschaltet, und das System geht in den Tag-Modus (Modusänderung 1) über. Das System kann auch aus dem Garagen-Modus in den Modus "Tag" übergehen (Modusänderung 3), wenn die Geschwindigkeit des Fahrzeugs größer als 35 km/h ist und die Spots A und B eine Helligkeit von mehr als 3000 lx während eines Zeitintervalls T von mehr als 25 s ermitteln.

Das System gelangt vom Garagen-Modus in einen Nacht-Modus (Modusänderung 4), wenn die Geschwindigkeit des Fahrzeugs größer als 35 km/h ist und die von den Spots A und B ermittelte Helligkeit für mehr als 25 s kleiner als 3000 lx ist.

Der Wechsel vom Tag- in den Nacht-Modus (Modusänderung 6) erfolgt, wenn die Spots A und B eine Helligkeit von weniger als 2000 lx ermitteln für eine Dauer von mehr als 120 s. Umgekehrt wechselt das System vom Nacht- in den Tag-Modus (Modusänderung 5), wenn der exponentielle Mittelwert der von Spot A ermittelten Helligkeit für mehr als 120 s größer als 8000 lx ist.

Aus dem Tag-Modus kann das System in einen Wald-Modus übergehen (Modusänderung 17), wenn der Spot A starke Signaländerungen feststellt und der exponentielle Mittelwert der Spots A, B und C kleiner als ein adaptiver Waldschwellwert ist. Der Wechsel vom Waldmodus in den Tagmodus erfolgt (Modusänderung 16), wenn die Spots A und B mehr als 8000 lx Helligkeit für eine Dauer *T* von mehr als 30 s ermitteln. Durch das Erkennen starker Signaländerungen des Spots A, die durch die Baumkronen der Bäume des Waldes verursacht werden, wird die Fahrzeugbeleuchtung zuverlässig auch im Wald eingeschaltet und erhöht so die Wahrnehmbarkeit des Fahrzeugs für andere Verkehrsteilnehmer.

Die Helligkeitswerte der Spots A, B und C können Momentanwerte oder "exponentielle Mittelwerte" gemäß den in der Beschreibungseinleitung aufgeführten Berechnungsvorschriften sein.

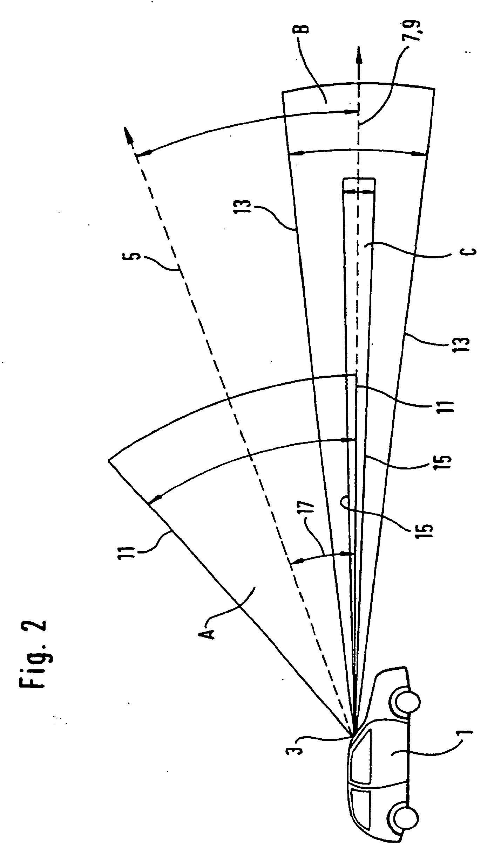

Figur 2 zeigt ein mit einer erfindungsgemäßen Vorrichtung ausgestattetes Fahrzeug 1. Im Bereich der Windschutzscheibe der Fahrzeugs 1 ist eine nicht näher dargestellte erfindungsgemäße Vorrichtung 3 zum automatischen Ein- oder Ausschalten der Fahrzeugbeleuchtung installiert. Weiter sind drei Spots A, B, C dargestellt, innerhalb derer drei Lichtsensoren der Vorrichtung 3 die Helligkeit ermitteln. Diese Spots A, B, C sind durch je eine Längsachse 5, 7 und 9 sowie die Mantellinien 11, 13 und 15 der ersten Spots A, des zweiten Spots B und des dritten Spots C kenntlich gemacht.

Der Winkel zwischen der Längsachse 5 des ersten Spots A und der Horizontalen ist mit 17 bezeichnet. Die Längsachsen des zweiten und dritten Spots B, C verlaufen bei diesem Ausführungsbeispiel in Richtung der Horizontalen.

Alle in der Beschreibung, der Zeichnung und den nachfolgenden Ansprüchen dargestellten Merkmale können sowohl einzeln als auch in beliebiger Kombination, miteinander erfindungswesentlich sein.

## Patentansprüche

1. Vorrichtung zum automatischen Ein- oder Ausschalten der Beleuchtung eines Fahrzeugs, mit einem ersten Lichtsensor, der die Helligkeit großflächig im Vorfeld des Fahrzeugs ermittelt sowie mit zumindest einem zweiten und einem dritten, die Helligkeit in Fahrtrichtung des Fahrzeugs ermittelnden Lichtsensor, wobei der erste Lichtsensor die Helligkeit H1 der innerhalb eines Spots (A) mit einem großen Kegelwinkel eintretenden Lichtstrahlen ermittelt, wobei der zweite Lichtsensor die Helligkeit H2 der innerhalb eines Spots (B) mit einem kleinen Kegelwinkel eintretenden Lichtstrahlen ermittelt, wobei die Längsachse (5) des ersten Spots (A) gegenüber der Horizontalen ansteigt, und wobei die Längsachse (7) des zweiten Spots (B) im wesentlichen horizontal verläuft, **dadurch gekennzeichnet, dass** der dritte Lichtsensor die Helligkeit H3 der innerhalb eines Spots (C) mit einem kleineren Kegelwinkel als der zweite Lichtsensor eintretenden Lichtstrahlen ermittelt und dass die Längsachsen des zweiten und des dritten Spots (B, C) koaxial verlaufen.

2. Vorrichtung nach Anspruch 1, **dadurch gekennzeichnet, dass** der Kegelwinkel des ersten Spots (A) größer 40° ist.

3. Vorrichtung nach einem der Ansprüche 1 oder 2, **dadurch gekennzeichnet, dass** der Kegelwinkel des zweiten Spots (B) kleiner 20° ist.

4. Vorrichtung nach einem der Ansprüche 1 bis 3, **dadurch gekennzeichnet, dass** der Kegelwinkel des zweiten Spots (B) 15° beträgt.

5. Vorrichtung nach einem der Ansprüche 1 bis 4, **dadurch gekennzeichnet, dass** der Kegelwinkel des dritten Spots (C) kleiner 6° ist.

6. Vorrichtung nach einem der Ansprüche 1 bis 5, **dadurch gekennzeichnet, dass** der Kegelwinkel des dritten Spots (C) 5° beträgt.

7. Fahrzeug mit einer Vorrichtung (3) nach einem der Ansprüche 1 bis 6, **dadurch gekennzeichnet, dass** die Längsachsen (7, 9) des zweiten und dritten Spots (B, C) in Richtung der Fahrzeuglängsachse verlaufen, und dass die Längsachses des ersten Spots (A) in der Draufsicht in Richtung der Fahrzeuglängsachse verläuft.

8. Fahrzeug mit einer Vorrichtung nach einem der Ansprüche 1 bis 6, **dadurch gekennzeichnet, dass** die Längsachsen des zweiten und dritten Spots (B, C) in Fahrtrichtung verlaufen, und dass die Längsachses des ersten Spots (A) in der Draufsicht in Fahrtrichtung verläuft.

9. Fahrzeug mit einer Vorrichtung nach einem der Ansprüche 1 bis 6, **dadurch gekennzeichnet, dass** die Längsachsen des zweiten und dritten Spots (B, C) in der Rollrichtung der gelenkten Räder verlaufen, und dass die Längsachse des ersten Spots (A) in der Draufsicht in der Rollrichtung der gelenkten Räder verläuft.

## Claims

1. Device for automatically switching on or off the illumination of a vehicle, having a first light sensor which determines the brightness over a large area in front of the vehicle, and having at least a second and a third light sensor which determine the brightness in the driving direction of the vehicle, the first light sensor determining the brightness H1 of the light beams entering inside a spot (A) with a large cone angle, the second light sensor determining the brightness H2 of the light beams entering inside a spot (B) with a small cone angle, the longitudinal axis (5) of the first spot (A) rising in relation to the horizontal, and the longitudinal axis (7) of the second spot (B) running substantially horizontally, **characterized in that** the third light sensor determines the brightness H3 of the light beams entering inside a spot (C) with a smaller cone angle than the second light sensor, and **in that** the longitudinal axes of the second and third spots (B, C) run coaxially.

2. Device according to Claim 1, **characterized in that** the cone angle of the first spot (A) is more than 40°.

3. Device according to either of Claims 1 and 2, **characterized in that** the cone angle of the second spot (B) is less than 20°.

4. Device according to one of Claims 1 to 3, **characterized in that** the cone angle of the second spot (B) is 15°.

5. Device according to one of Claims 1 to 4, **characterized in that** the cone angle of the third spot (C) is less than 6°.

6. Device according to one of Claims 1 to 5, **characterized in that** the cone angle of the third spot (C) is 5°.

7. Vehicle having a device (3) according to one of Claims 1 to 6, **characterized in that** the longitudinal axes (7, 9) of the second and third spots (B, C) run in the direction of the longitudinal axis of the vehicle, and **in that** the longitudinal axis of the first spot (A) runs in the direction of the longitudinal axis of the vehicle in top view.

8. Vehicle having a device according to one of Claims 1 to 6, **characterized in that** the longitudinal axes of the second and third spots (B, C) run in the direction of travel, and **in that** the longitudinal axis of the first spot (A) runs in the direction of travel in top view.

9. Vehicle having a device according to one of Claims 1 to 6, **characterized in that** the longitudinal axes of the second and third spots (B, C) run in the direction of movement of the steered wheels, and **in that** the longitudinal axis of the first spot (A) in top view runs in the direction of movement of the steered wheels.

## Revendications

1. Dispositif destiné à l'activation ou à la désactivation automatiques de l'éclairage d'un véhicule automobile, comportant un premier capteur de lumière qui détermine la luminosité sur une grande surface dans le champ avant du véhicule ainsi qu'au moins un deuxième et un troisième capteur de lumière qui détermine la luminosité dans le sens du déplacement du véhicule, le premier capteur de lumière déterminant la luminosité H₁ des rayons lumineux incidents à l'intérieur d'un spot (A) avec un grand angle de cône, le deuxième capteur de lumière déterminant la luminosité H₂ des rayons lumineux incidents à l'intérieur d'un spot (B) avec un petit angle de cône, l'axe longitudinal (5) du premier spot (A) suivant une pente ascendante par rapport à l'horizontale, et l'axe longitudinal (7) du deuxième spot (B) s'étendant sensiblement dans le sens horizontal, **caractérisé en ce que** le troisième capteur de lumière détermine la luminosité H₃ des rayons lumineux incidents à l'intérieur d'un spot (C) avec un plus petit angle de cône que le deuxième capteur de lumière et **en ce que** les axes longitudinaux du deuxième et du troisième spot (B, C) s'étendent coaxialement.

2. Dispositif selon la revendication 1, **caractérisé en ce que** l'angle de cône du premier spot (A) est supérieur à 40°.

3. Dispositif selon l'une des revendications 1 ou 2, **caractérisé en ce que** l'angle de cône du deuxième spot (B) est inférieur à 20°.

4. Dispositif selon l'une des revendications 1 à 3, **caractérisé en ce que** l'angle de cône du deuxième spot (B) est égal à 15°.

5. Dispositif selon l'une des revendications 1 à 4, **caractérisé en ce que** l'angle de cône du troisième spot (C) est inférieur à 6°.

6. Dispositif selon l'une des revendications 1 à 5, **caractérisé en ce que** l'angle de cône du troisième spot (C) est égal à 5°.

7. Véhicule avec un dispositif (3) selon l'une des revendications 1 à 6, **caractérisé en ce que** les axes longitudinaux (7, 9) du deuxième et du troisième spot (B, C) s'étendent dans la direction de l'axe longitudinal du véhicule et **en ce que** l'axe longitudinal du premier spot (A) s'étend, sur la vue en élévation, en direction de l'axe longitudinal du véhicule.

8. Véhicule avec un dispositif selon l'une des revendications 1 à 6, **caractérisé en ce que** les axes longitudinaux du deuxième et du troisième spot (B, C) s'étendent dans le sens du déplacement et **en ce que** l'axe longitudinal du premier spot (A) s'étend, sur la vue en élévation, dans le sens du déplacement.

9. Véhicule avec un dispositif selon l'une des revendications 1 à 6, **caractérisé en ce que** les axes longitudinaux du deuxième et du troisième spot (B, C) s'étendent dans le sens de roulement des roues directrices et **en ce que** l'axe longitudinal du premier spot (A) s'étend, sur la vue en élévation, dans le sens de roulement des roues directrices.
